# EUROPEAN PATENT SPECIFICATION

(11) **EP 2 639 771 B1**
(45) Date of publication and mention of the grant of the patent: **07.08.2019**
(21) Application number: 12159785.0
(22) Date of filing: 16.03.2012
(51) Int. Cl.: G06T 19/00, G06T 7/00, B60R 21/00

(54) **Augmented vision in image sequence generated from a moving vehicle**
Erweitertes Sehen in einer Bildsequenz, aufgenommen aus einem sich bewegenden Fahrzeug
Vision augmentée pour séquence d'images prise à partir d'un véhicule en mouvement

(43) Date of publication of application: 18.09.2013
(73) Proprietor: Volvo Car Corporation, 40531 Göteborg (SE)
(72) Inventor: Ödblom, Anders, 430 94 Bohus-Björkö (SE); Nilsson, Jonas, 43149 Mölndal (SE)
(74) Representative: Kransell & Wennborg KB

(56) References cited:
- US-B2- 7 246 050
- JONAS NILSSON ET AL: "Performance evaluation method for mobile computer vision systems using augmented reality", VIRTUAL REALITY CONFERENCE (VR), 2010 IEEE, IEEE, PISCATAWAY, NJ, USA, 20 March 2010 (2010-03-20), pages 19-22, XP031656133, ISBN: 978-1-4244-6237-7
- KARTHIK SATHYANARAYANA ET AL: "Generating highly realistic 3D animation video with depth-of-field and motion blur effects", PROCEEDINGS OF SPIE, vol. 7798, 19 August 2010 (2010-08-19), pages 1-11, XP055110188, ISSN: 0277-786X, DOI: 10.1117/12.861339

## Description

### TECHNICAL FIELD

The present disclosure relates to a method for inserting a fictive object into an image set.

### BACKGROUND

Nowadays, vehicles may be provided with an active safety system, such as an active collision avoidance system. An active safety system generally determines a data set indicative of the state of the vehicle and/or its driver and/or the environment surrounding the vehicle. If the above data set indicates that the vehicle is in, or will be in, a potentially unsafe traffic situation, the active safety system may take certain safety measures.

Purely by way of example, such safety measures may comprise issuing a warning signal informing the occupants of the vehicle hosting the active safety system that the vehicle is in, or will be in, an unsafe traffic situation. Optionally, and again purely by way of example, the safety measures may comprise the actuation of collision avoidance means, e.g. means that will automatically brake the vehicle and/or automatically steer away from a potentially unsafe area. As another non-limiting example, the safety measure may comprise the activation of safety systems, such as seatbelt tensioners, airbags and the like.

It is generally desirable that the active safety system be tuned such that the appropriate safety measures are taken when, but only when, the vehicle hosting the safety system actually is in, or will be in, an unsafe traffic situation.

One example of how an active safety system is tuned is that the active system is installed in a vehicle and the vehicle is thereafter subjected to a plurality of different traffic scenarios, some of which are unsafe and some of which are safe. However, the above tuning method may be time-consuming and expensive since a plurality of actual traffic scenarios have to be generated for the vehicle hosting the active safety system.

Another example of how to tune an active safety system is to use augmented reality. In augmented reality, an original data set, indicative of the state of the vehicle and/or environment surrounding the vehicle, is firstly determined by one or more sensors connected to a vehicle. Generally, at least one of the sensors is a camera such that the data set includes an image set.

Jonas Nilsson et al. "Performance evaluation method for mobile computer vision systems using augmented reality". Virtual Reality Conference (VR), 2010 IEEE, IEEE, Piscataway, NJ, USA, 20 March 2010 (2010-03-20), pages 19-22, XP031656133, ISBN 978-1-4244-6237-7 discloses a framework which uses augmented reality for evaluating the performance of mobile vision computer systems.

US 7 246 050 B2 discloses a simulator and a method for simulating the experience of observing potential collision obstacles or other hazard images to the human operator of an otherwise conventional vehicle moving in a normal manner in a natural environment. US 7 246 050 B2 teaches that, in addition to the mobile vehicle, computer-based image generation devices, and position, velocity, acceleration, measurement instruments are provided to enable the simulated visual hazard images, including operator perception of and response to those hazard images.

Then, one or more fictive objects are simulated by modifying the data set such that the thus modified data set is indicative of the presence of a foreign object in the environment surrounding the vehicle. The above method is often referred to as an augmented reality method.

### SUMMARY

One object of the present disclosure is to establish an augmented data set that is appropriately realistic.

This object is achieved by a method according to claim 1.

As such, the present disclosure relates to a method for inserting a fictive object into an image set that has been generated by at least one camera when attached to a moving vehicle, the method comprising:
- determining an optical measure indicative of a motion blur of said at least one camera that occurred during the generation of the image set, and
- inserting the fictive object into at least one image of the image set, wherein the visual appearance of the fictive object is modified such that it corresponds to the optical measure;
said method being characterized in that it further comprises determining a trajectory along which said at least one camera is moving when attached to said moving vehicle, said method comprising all further steps specified in independent claim 1.

The above method implies that the fictive object may be inserted in the image such that the image and the fictive object together form a realistic augmented image. By virtue of the realistic augmented image, a more efficient tuning of an active safety system may be obtained.

Optionally, the method according to claim 1 is suitable for generating an image set for tuning and/or training an active safety system for a vehicle. Preferably, the method according to claim 1 is adapted to generate an image set for tuning and/or training an active safety system for a vehicle.

Optionally, the optical measure is indicative of surface layer appearance of objects imaged in the image set.

Optionally, the optical measure is indicative of an optical condition of the at least one camera. Purely by way of example, the optical condition of the at least one camera may relate to at least one of the following: a saturation of the images at high light intensities, streaks in images (e.g. charge overflow in pixels) or vignetting.

Optionally, the optical measure is indicative of a blur and/or distortion of the at least one camera. As used herein, the expression "blur of the at least one camera" in intended to encompass blur emanating from reflections internally within the camera, e.g. within a lens of the at least one camera. The expression "distortion" of the at least one camera is intended to encompass a non-linear mapping from a portion, e.g. a sensor, of the at least one camera to an object imaged by the at least one camera.

Optionally, the vehicle comprises a windshield and the optical measure is indicative of a windshield diffraction of the at least one camera.

The characterising steps of the method of the invention comprise determining a trajectory along which the at least one camera is moving when being attached to a moving vehicle, the method comprising:
- determining a sample set of trajectory indication samples, the sample set comprising at least two trajectory indication samples;
- for each trajectory indication sample in the sample set, determining an individual reliability measure indicative of the reliability of the associated trajectory indication sample;
- determining a trajectory estimate;
- determining a trajectory estimate error by, for each one of the trajectory indication samples in the sample set, determining an error measure indicative of an error between the trajectory estimate and the trajectory indication sample, and by combining the error measures, weighted by the individual reliability measure, and
- determining the trajectory as being a trajectory estimate that results in a trajectory estimate error that is within a predetermined trajectory estimate error range.

Optionally, the above method for determining a trajectory is used for generating a data set for tuning and/or training an active safety system for a vehicle. Preferably, the above method for determining a trajectory is used for generating a data set for tuning and/or training an active safety system for a vehicle.

Optionally, a trajectory indication sample in the sample set is determined by utilizing a vehicle dynamics model.

Optionally, a trajectory indication sample in the sample set is determined by utilizing vehicle motion measurements.

Optionally, a trajectory indication sample in said sample set is determined by utilizing vehicle control input measurements.

Optionally, a trajectory indication sample in the sample set is determined by utilizing GPS and/or dGPS measurements.

Optionally, a trajectory indication sample in the sample set is determined by utilizing at least one RADAR, LIDAR, laser or V2X sensor. As used herein, the expression "V2X sensor" relates to a sensor that uses remote sensing based on communication technologies.

Optionally, the error measures are summed to thereby obtain the trajectory estimate error.

Optionally, an error measure is multiplied with its corresponding individual reliability measure in order to obtain the weighted error measure.

Optionally, at least one of the trajectory indication samples is determined using the at least one camera.

Optionally, the trajectory indication sample associated with the at least one camera is determined by:
- generating an image at each time instant in a time set comprising at least two subsequent time instants to thereby obtain an image set, and
- determining the trajectory indication sample associated with the at least one camera by using the image set.

Optionally, the trajectory indication sample associated with the at least one camera is determined by:
- identifying if the image set images a moving object, and
- if a moving object has been imaged, removing the moving object from the image set prior to determining the trajectory indication sample.

Optionally, the steps of determining a trajectory estimate and determining a corresponding trajectory estimate error are repeated until a trajectory estimate has been found which has a trajectory estimate error within the predetermined trajectory estimate error range.

Optionally, the method further comprises inserting a fictive object into a scenario set, the scenario set comprising a first scenario sample and a second scenario sample each one of which being generated by a respective sensor attached to a moving vehicle, the method comprising:
- inserting the fictive object into the first scenario sample but not into the second scenario sample.

### BRIEF DESCRIPTION OF THE DRAWINGS

The present invention will hereinafter be explained in greater detail by means of non-limiting examples and with reference to the appended drawings in which:
Fig. 1 illustrates a vehicle with a camera whereby the vehicle drives along a trajectory;
Fig. 2 schematically illustrates an augmented reality method;
Fig. 3 schematically illustrates a preferred implementation of a rendering method;
Fig. 4 schematically illustrates a preferred implementation of a trajectory determination method, and
Fig. 5 schematically illustrate reliability measures used in the Fig. 4 method.

It should be noted that the appended drawings are not necessarily drawn to scale and that the dimensions of some features of the present invention may have been exaggerated for the sake of clarity.

### DETAILED DESCRIPTION OF PREFERRED EMBODIMENTS

The invention will, in the following, be exemplified by embodiments. It is to be understood, however, that the embodiments are included in order to explain principles of the invention and not to limit the scope of the invention defined by the appended claims.

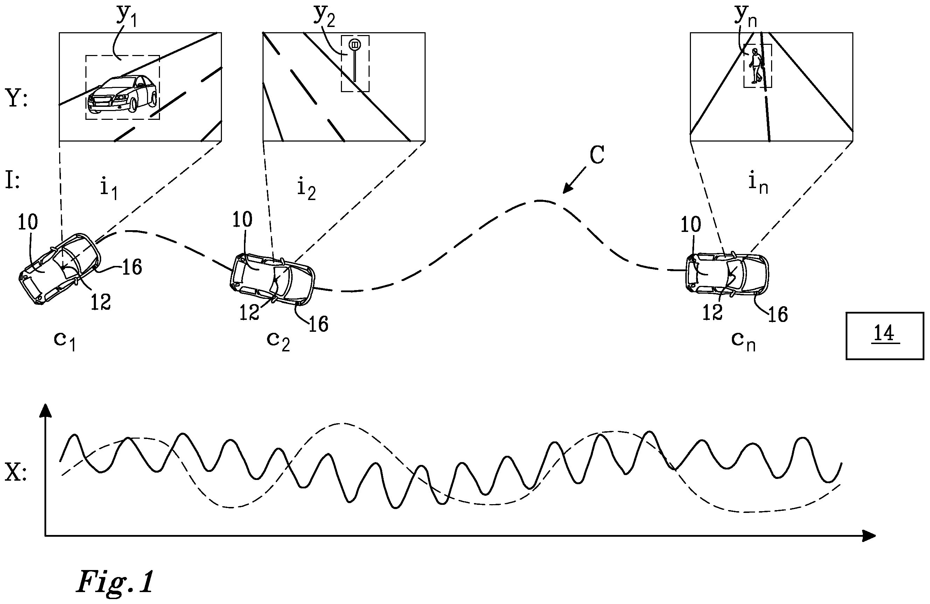

Fig. 1 schematically illustrates a vehicle 10 comprising a camera 12. Moreover, the vehicle 10 comprises at least one additional sensor 16, i.e. a sensor in addition to the camera, selected from a group of additional sensors. Purely by way of example, the at least one additional sensor may be a laser, radar, lidar, gyro, camera, V2X, ultra sound, GPS or dGPS sensor. As another non-limiting option, the at least one additional sensor may comprise a remote sensor that is not placed on the vehicle itself but connected to the vehicle via a vehicle communication system (not shown).

Moreover, it should be noted that although only one camera 12 is illustrated and discussed hereinbelow, the below method could also use information for two or more cameras (not shown).

Fig. 1 further illustrates that the camera 12 moves along a trajectory C that includes a plurality of trajectory points *c₁, c₂* ... *cₙ*, each one of which corresponding to a specific time instant tⱼ. Moreover, at each time instant tⱼ an image is recorded by the camera and the images thus recorded form an image sequence or image set *I* = [*i₁, i₂* ... *iₙ*]. In a similar vein, at certain time instants tₓⱼ, a sensor data sample *xⱼ* may be determined by the additional sensor. The sensor data samples thus determined may form a sensor data sequence or sensor data set *X* = [*x₁, x₂* ... *xₘ*]. A time instant tₓⱼ at which a sensor data sample *xⱼ* is determined does not necessarily have to be identical to a time instant tⱼ at which an image *iⱼ* is recorded. However, it is generally desired that a temporal relation between an image time instant tⱼ and a sensor data time instant tₓⱼ is known or at least possible to determine.

Moreover, at least portions of the movement of the camera 12 may be modeled by a vehicle dynamics model 14. Purely by way of example, a vehicle dynamics model 14 may be established in order to assess the probability that the camera 12 could actually follow a proposed trajectory. As a non-limiting example, a vehicle dynamics model 14 may include ranges for velocities and/or accelerations that the vehicle 10 could actually achieve. Thus, if the vehicle must have a velocity and/or acceleration outside of the above ranges in order to be able to follow a proposed trajectory, the probability that the vehicle 10 could follow that trajectory is low.

The image set *I* and the sensor data set *X* may be combined to a data set, viz *D* =*{I, X}.* Naturally, a data set *D* may comprise a plurality of sensor data sets *X¹, X²... X^{N}.* The data set *D* may be used for determining an output set *Y* = [*y₁, y₂* ... *y_{M}*]. The output set *Y* may include information as regards detected, classified and tracked objects in the data set *D*.

The image set *I* as well as each one of the sensor data sets *X¹, X²... X^{N}* may be referred to as a trajectory indication sample since each one of the above sets is indicative of the trajectory *C* that the camera 12 actually follows when mounted to the vehicle 10.

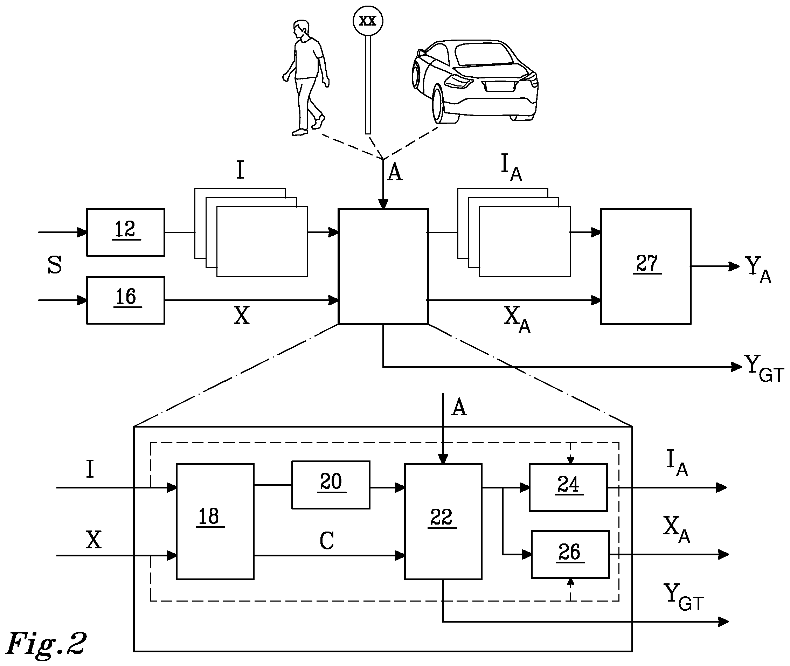

Fig. 2 schematically illustrates an augmented reality method wherein at least one virtual agent A is added to the data set *D* to thereby obtain an augmented data set *D_{A}* =*{I_{A}, X_{A}}.* However, it should be noted that, in the Fig. 2 augmented reality method, a plurality of virtual agents may be added. As may be gleaned from Fig. 2, the method may comprise a plurality of procedures or sub-methods.

Preferably, before any virtual agent is added to the data set *D*, any moving object included in the data set *D* is firstly deleted. Purely by way of example, vehicles (not shown) in front of the vehicle 10 hosting the camera 12 may be deleted from the data set *D* in order to obtain a cleaner original data set *D*. The above deletion step may for instance be preferred when the data set *D* has been recorded by multiple vehicle recordings.

For instance, the augmented reality method may comprise a trajectory determination procedure 18 for determining the trajectory 14 along which the camera 12 has been moved. Details of the trajectory determination procedure 18 will be described hereinbelow.

Moreover, the augmented reality method may comprise a 3D scene modeling procedure 20 that determines a 3D scene model M_{G} of the data set *D*.

Furthermore, the at least one virtual agent A may be added to the 3D scene model M_{G} in an animation procedure 22 such that an augmented 3D scene model M_{A} is obtained. The augmented 3D scene model M_{A} may then preferably be combined with at least portions of the data set *D* to thereby obtain an augmented data set *D_{A}.* As such, the augmented 3D scene model M_{A} may subsequently be combined with the image set *I* and converted to an augmented image set *I_{A}* in a rendering procedure 24 and/or combined with the sensor data set *X* to an augmented sensor data set *X*_{A} in a sensor data augmentation procedure 26.

As such, a virtual agent A may, in some embodiments, be included in only one of the image set *I* and the sensor data set *X*. An example of when such a selective insertion is appropriate may be when the virtual agent is concealed from the camera's 12 field of view but wherein the at least one sensor associated with the sensor data set *X* could nevertheless be able to detect the virtual agent A.

Preferred features of the rendering procedure 24 will be discussed hereinbelow.

As has been intimated hereinabove, the rendering procedure 24 comprises a step of inserting a fictive object *a⁰* into the image set *I* that has been generated by a camera 12 when attached to a moving vehicle 10. Preferably, the fictive object *a⁰* emanates from the at least one virtual agent A that has been included in an augmented 3D scene model M_{A} as has been described hereinabove. However, in other variants of augmented reality methods, the fictive object *a⁰* may be inserted as a 2D image into the image set *I*.

Irrespective of how the fictive object has been obtained, the method of the present invention comprises:
- determining an optical measure indicative of an optical condition that occurred during the generation of the image set *I*, and
- inserting the fictive object *a⁰* into at least one image of the set of images *I*, wherein the visual appearance of the fictive object is modified such that it corresponds to the optical measure.

The optical measure may be indicative of surface layer appearance of objects imaged in the image set *I*. Purely by way of example, the surface layer appearance may in turn be indicative of the weather and illumination source conditions occurring when the image set *I* was generated. For instance, on a clear and sunny day, objects imaged in the image set *I* may be illuminated by a relatively intensive light. This may in turn result in relatively intensive reflections from the objects. As another example, on a rainy and/or foggy day, objects may be coated with moisture which in turn will change the reflection properties, and thus the surface layer appearance, of the objects.

Optionally, the optical measure may be indicative of an optical condition of the camera 12 as such. An example of an optical condition of the camera 12 is the motion blur of the camera 12. The motion blur emanates from the fact that the camera 12 was moving when at least some of the images of the image set *I* were generated. The camera 12 generated the images of the image set *I* during a camera exposure time Tₑ. The camera exposure time Tₑ may be different for different images or the camera exposure time Tₑ may be the same for the each one of the images in the image set *I*.

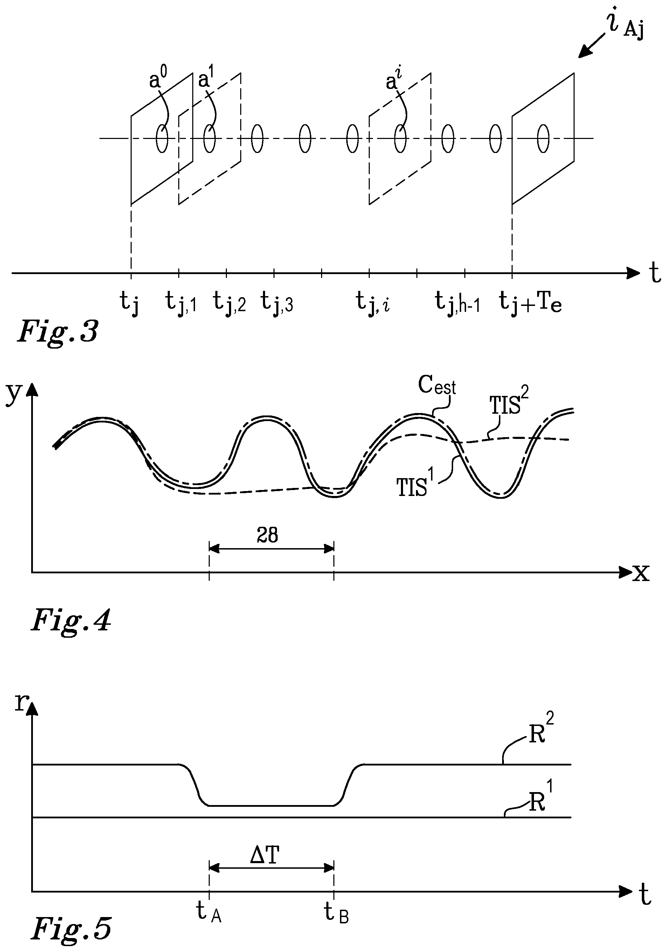

Fig. 3 illustrates an embodiment of the method of the present invention. As may be gleaned from Fig. 3, the camera 12 generates an image *i*ⱼ during a camera exposure time Tₑ. As such, the image *I*ⱼ is generated from a start time tⱼ to an end time tⱼ+ Tₑ.

Since the camera 12 may have moved in relation to objects (not shown) imaged by the camera 12 from the start time tⱼ to the end time tⱼ + Tₑ, such objects may have been imaged with a certain amount of camera motion blur.

In order to mimic the above discussed camera motion blur when inserting a fictive object a⁰ into the set of images, a plurality of sub time instants t_{j,0}, t_{j,1} ... t_{j,h}, ranging from the start time tⱼ to the end time tⱼ + Tₑ, may preferably be generated. Purely by way of example, the number of sub time instants may be within the range of 5 - 20. Moreover, a measure indicative of a desired intensity of the fictive object may be established. The desired intensity may for instance be determined using information as regards *inter alia* the lighting conditions present when the image set *I* was generated as well as the intended surface layer appearance of the fictive object a⁰.

For each one of the above discussed sub time instants t_{j,0}, t_{j,1} ... t_{j,h}, a sub image a⁰ᵢ of the fictive object is generated wherein the intensity of that image preferably equals the desired intensity of the foreign object divided by the number of sub time instants. Moreover, for each one of the sub time instants t_{j,0}, t_{j,1} ... t_{j,h}, the relative position between the camera 12 and the fictive object a⁰ is determined in order to thereby determine the position the fictive object a⁰ in the thus modified image *i*_{*A*j}.

The sub images a⁰₁, a⁰₂... a⁰ₕ are thereafter aggregated to a full image a⁰ which thus takes the camera motion blur into account. If an image has been generated using a plurality of exposures, the above steps with sub-images are preferably repeated for each one of the exposures.

The full image a⁰ of the fictive object thus obtained may then be added to the image *iⱼ* to thereby obtain the modified image *i*_{*A*j}. Optionally, each one of the sub images a⁰_{1,} a⁰_{2...} a⁰ₕ may be added individually to thereby obtain the modified image *i*_{*A*j}.

Irrespective of whether the full image a⁰ of the fictive object or each one of the sub images a⁰₁, a⁰_{2...} a⁰ₕ are added to the image *iⱼ*, a portion of the edge(s) of the fictive object image may cover only a portion of a pixel of the image *iⱼ*. In such a case, the pixel value of the pixel partially covered is preferably determined by weighting the contribution of the fictive object image and the image background.

Instead of, or in addition to, taking the camera motion blur into account, the optical measure may be indicative of a blur and/or distortion of the camera as such.

In order to determine a measure indicative of the blur and/or distortion of the camera, information from a calibration of the camera may be used. Purely by way of example, the camera 12, for instance when mounted on the vehicle 10, may have been arranged to capture a calibration image of a calibration object, the size and position of which are known. As a non-limiting example, the calibration object may comprise a plurality of sections or chequers.

Based on the calibration image and the calibration object, it is possible to determine a camera mapping, e.g. a linear mapping (or homography) and/or a non-linear mapping from the environment ambient of the camera to the image generated by the camera.

The camera mapping may then be used for modifying the image of the foreign object a⁰ before inserting it into the image *i*ⱼ.

If the camera 12 is located behind a windshield (not shown) of a vehicle 10, a windshield diffraction and other optical effects may influence the images generated by the camera 12. In such as case, a camera mapping may also include the windshield diffraction.

The camera mapping may also describe the relation between the light intensity observed by the camera and the corresponding image brightness at each pixel position in the image. If surface reflection properties of objects in the environment are known, the properties of the light sources can be estimated from the camera mapping, object surface reflection properties and camera mapping. The estimated properties of the light sources, together with object surface reflection properties of the foreign object a⁰, can then be used for modifying the image of the foreign object a⁰ before inserting it into the image *iⱼ*.

Another option to enable that the augmented data set *D_{A}* is perceived as being realistic may be to ensure that the trajectory along which the camera 12 is moving when being attached to the moving vehicle 10 is determined with an appropriate degree of accuracy. To this end, the present invention further proposes a trajectory determination method. It should be noted that the below discussed trajectory determination method may be used together with the above discussed rendering method. However, the trajectory determination method could also be used separately from the above discussed rendering method.

As such, the trajectory determination method comprises:
- determining a sample set of trajectory indication samples *TlS¹,..., TIS^{P}* the sample set comprising at least two trajectory indication samples
- for each trajectory indication sample *TIS¹,..., TIS^{P}* in the sample set, determining an individual reliability measure R¹, ... R^{P} indicative of the reliability of the associated trajectory indication sample;
- determining a trajectory estimate Cₑₛₜ;
- determining a trajectory estimate error CE by, for each one of the trajectory indication samples *TIS¹,..., TIS^{P}* in the sample set, determining an error measure EM¹, ... EM^{P} indicative of an error between the trajectory estimate Cₑₛₜ and the trajectory indication sample *TIS¹,..., TIS^{P}* and by combining the error measures EM¹... EM^{P}, weighted by the individual reliability measure R¹, ... R^{P}, and
- determining the trajectory C as being a trajectory estimate Cₑₛₜ that results in a trajectory estimate error CE that is within a predetermined trajectory estimate error range ΔCE.

It should be noted that one or more of the individual reliability measures R¹, R², ... R^{P} may be time-dependent such that the actual value of the concerned individual reliability measures varies with time.

Purely by way of example, a trajectory indication sample *TIS^{j}* in the sample set may be determined by utilizing a vehicle dynamics model and/or vehicle control input measurements. As another non-limiting example, a trajectory indication sample *TIS^{j}* in the sample set is determined by utilizing GPS and/or dGPS measurements. Moreover, as a further non-limiting example, a trajectory indication sample *TIS^{j}* in the sample set is determined by utilizing at least one RADAR, LIDAR or laser sensor.

As an additional non-limiting example, a trajectory indication sample *TIS^{j}* in the sample set may be determined by using vehicle communication means, e.g. means communicating inter vehicles and/or between the vehicle and an infra-structure such as signal receivers and/or transmitters located adjacent to a road along which the vehicle 10 is travelling.

As a further non-limiting example, a trajectory indication sample *TIS^{j}* in said sample set is determined by utilizing vehicle motion measurements. Purely by way of example, the vehicle motion measurements may be performed using at least one of the following sensors: an accelerometer, a gyro or a wheel speed sensor.

Fig. 4 illustrates an embodiment of the trajectory determination method. In the Fig. 4 embodiment, at least one of the trajectory indication samples *TIS¹* is determined using the camera 12. As such, at least one of the trajectory indication samples *TIS¹* preferably utilizes the image set *I* that has been discussed hereinabove. Purely by way of example, the image set *I* may be used for determining a trajectory indication sample by following feature points (not shown), which feature points for instance may correspond to fixed objects imaged by the camera, during at least two images *iₖ, i*_{*k*+*1*} in the image set *I*.

Based on the relative position of the feature points, a trajectory indication sample *TIS¹*, which trajectory indication sample *TIS¹* may be an estimate of the trajectory C of the camera 12, may be determined using e.g. triangulation and/or iterative methods.

Moreover, a second trajectory indication sample *TIS²* may preferably be determined by a sensor data set *X* that has been recorded by e.g. vehicle motions measurements. Purely by way of example, the vehicle motions measurements may record information as regards *inter alia* the speed and acceleration of the vehicle 10 and/or at least one of the following: the yaw, the yaw rate and the yaw acceleration of the vehicle 10.

Fig. 5 illustrates the value of the individual reliability measures *R¹, R²* as a function of time. As may be gleaned from Fig. 5, the first trajectory indication sample *TIS¹* in the Fig. 4 and 5 example is assumed to have a constant reliability measure *R¹* whereas the second trajectory indication sample *TIS²* is exemplified to have reliability measure *R²*, the value of which drops during a certain time period from a first time instant t_{A} to the second time instant t_{B}.

Purely by way of example, the drop of the second reliability measure *R²* may be occasioned by the fact that there has been an indication that the vehicle motions measurements were not delivering reliable results from the first time instant t_{A} to a second time instant t_{B}.

Returning to Fig. 4, the first trajectory indication sample *TIS¹* disclosed therein has a first trajectory extension in the world coordinates x,y (or possibly the world coordinates in the three dimensions x,y,z). In a similar vein, the second trajectory indication sample *TIS²* has a second trajectory extension in the world coordinates x,y.

However, it should be noted that each trajectory indication sample does not necessarily have to include complete information in order to establish a trajectory extension in the world coordinates x,y (or possibly the world coordinates in the three dimensions x,y,z). Quite the contrary, a trajectory indication sample may for instance only include information as regards the yaw, the yaw rate or the yaw acceleration of the vehicle 10 and it may consequently not be possible to determine a trajectory extension in the world coordinates based on that information alone.

As another option, a trajectory indication sample may be determined using the above discussed vehicle dynamics model 14. As such, using a trajectory estimate Cₑₛₜ, the vehicle dynamics model 14 may be used for determining whether or not the vehicle 10, with for instance its physical limitations as regards e.g. velocities and accelerations, actually could follow the proposed trajectory estimate Cₑₛₜ. If the proposed trajectory estimate Cₑₛₜ comprises portions which the vehicle 10 will have a low, or even zero, probability to actually be able to follow, based on the vehicle dynamics model 14, the error measure EM^{j} for those portions will be relatively high.

Fig. 4 further illustrates a trajectory estimate Cₑₛₜ and, according to the trajectory determination method of the present invention, a trajectory estimate error CE is subsequently determined by, for each one of the trajectory indication samples *TlS¹, TIS²* in the sample set, determining an error measure EM¹, EM² indicative of an error between the trajectory estimate Cₑₛₜ and the trajectory indication sample *TlS¹, TIS²* weighted by the individual reliability measure R¹, R². Purely by way of example, the error measures EM¹, EM² may be weighted by multiplication of the corresponding reliability measure R¹, R².

Purely by way of example, an error measure EM¹ may be determined by establishing the absolute value of the distance between a point on the trajectory estimate Cₑₛₜ and a point on a trajectory indication sample *TIS¹* for each time instant t₀, t₁ ... tₙ. The error measure EM¹ may then be determined by simply adding the distances.

As another option, the distance between the trajectory estimate Cₑₛₜ and a trajectory indication sample *TIS²* may be determined by determining the area between the trajectory extension of the trajectory estimate Cₑₛₜ and the trajectory extension of the trajectory indication sample *TIS².*

It should also be emphasized that different types of error measures may be used for different trajectory indication samples *TlS¹, TIS².* Purely by way of example, a first error measure EM¹ for the first trajectory indication sample *TIS¹* may be determined by e.g. the distance or the area method that have been described hereinabove, whereas a second error measure EM² for the second trajectory indication sample *TIS²* may be determined by firstly determining the yaw angle of the trajectory estimate Cₑₛₜ along its trajectory extension and subsequently determining a second error measure EM² based on the difference between the yaw of the trajectory estimate Cₑₛₜ and the second trajectory indication sample *TIS².*

As may be realized from Fig. 4, there is a relatively large difference between the trajectory estimate Cₑₛₜ and the second trajectory indication sample *TIS²* in a specific region 28. However, this region 28 corresponds to the time from the first time instant t_{A} to the second time instant t_{B}, wherein the second trajectory indication sample *TIS²* has a relatively low reliability measure R² (see Fig. 5). As such, the relatively large difference between the trajectory estimate Cₑₛₜ and the second trajectory indication sample *TIS²* in the above discussed region will not contribute significantly to the second error measure EM² and consequently not significantly to the trajectory estimate error CE either.

The trajectory estimate error CE determined for the trajectory estimate Cₑₛₜ is subsequently compared to a predetermined trajectory estimate error range ΔCE. If the trajectory estimate error CE is within the predetermined trajectory estimate error range ΔCE, the trajectory estimate Cₑₛₜ is deemed to be an appropriate approximation of the actual trajectory of the camera 12.

However, if the trajectory estimate error CE is outside of the predetermined trajectory estimate error range ΔCE, the trajectory estimate Cₑₛₜ is rejected and a new trajectory estimate Cₑₛₜ is generated and the above steps are repeated.

Preferably, the trajectory determination method includes an iterative procedure wherein the steps of determining a trajectory estimate Cₑₛₜ and determining a corresponding trajectory estimate error CE are repeated until a trajectory estimate Cₑₛₜ has been found which has a trajectory estimate error CE within the predetermined trajectory estimate error range ΔCE.

Purely by way of example, if an iterative procedure is used, the first trajectory estimate Cₑₛₜ in the procedure may be selected on the basis of at least one of the trajectory indication samples. As a non-limiting example, if any one of the trajectory indication samples present a full trajectory sample (i.e. in the x,y or x,y,z world coordinates) that trajectory indication sample may be used as a first trajectory estimate Cₑₛₜ.

While there have been shown and described and pointed out fundamental novel features of the invention as applied to a preferred embodiment thereof, it will be understood that various omissions and substitutions and changes in the form and details of the devices illustrated, and in their operation, may be made by those skilled in the art.

For instance, although only two trajectory indication samples *TlS¹, TIS²* have been presented in the example hereinabove, other embodiments of the trajectory determination method may use three or more trajectory indication samples.

Furthermore, it should be recognized that structures and/or elements and/or method steps shown and/or described in connection with any disclosed form or embodiment of the invention may be incorporated in any other disclosed or described or suggested form or embodiment as a general matter of design choice. It is the intention, therefore, to be limited only as indicated by the scope of the claims appended hereto.

## Claims

1. A method for inserting a fictive object (*a⁰*) into an image set (*I*) that has been generated by at least one camera (12) when attached to a moving vehicle (10), said method comprising:
• determining an optical measure indicative of a motion blur of said at least one camera (12) that occurred during the generation of said image set (*I*);
• inserting said fictive object (a⁰) into at least one image of said image set (*I*), wherein the visual appearance of said fictive object is modified such that it corresponds to said optical measure;
said method **being characterized in that** it further comprises determining a trajectory (C) along which said at least one camera (12) is moving when attached to said moving vehicle (10), said method comprising:
• determining a sample set of trajectory indication samples (*TIS¹*, *TIS²*), said sample set comprising at least two trajectory indication samples;
• for each trajectory indication sample in said sample set (*TIS¹, TIS²*), determining an individual reliability measure (R¹, R²) indicative of the reliability of the associated trajectory indication sample;
• determining a trajectory estimate (Cₑₛₜ);
• determining a trajectory estimate error (CE) by, for each one of said trajectory indication samples in said sample set, determining an error measure (EM¹, EM²) indicative of an error between the trajectory estimate (Cₑₛₜ) and said trajectory indication sample (*TIS¹, TIS²*), and by combining said error measures, weighted by said individual reliability measure, and
• determining said trajectory (C) as being a trajectory estimate (Cₑₛₜ) that results in a trajectory estimate error (CE) that is within a predetermined trajectory estimate error range (ΔCE).

2. The method according to claim 1, wherein said optical measure is indicative of surface layer appearance of objects imaged in said image set (*I*).

3. The method according to claim 1 or 2, wherein said optical measure is indicative of an optical condition of said at least one camera (12).

4. The method according to claim 3, wherein said optical measure is indicative of a blur and/or distortion of said at least one camera (12).

5. The method according to any one of the preceding claims, wherein said vehicle comprises a windshield and said optical measure is indicative of a windshield diffraction of said at least one camera (12).

6. The method according to any one of the preceding claims, wherein a trajectory indication sample (*TIS²*) in said sample set is determined by utilizing a vehicle dynamics model.

7. The method according to any one of the preceding claims, wherein a trajectory indication sample (*TIS²*) in said sample set is determined by utilizing vehicle motion measurements.

8. The method according to any one of the preceding claims, wherein a trajectory indication sample (*TIS²*) in said sample set is determined by utilizing vehicle control input measurements.

9. The method according to any one of the preceding claims, wherein a trajectory indication sample (*TIS²*) in said sample set is determined by utilizing GPS and/or a dGPS measurements.

10. The method according to any one of the preceding claims, wherein a trajectory indication sample (*TIS²*) in said sample set is determined by utilizing at least one RADAR, LIDAR or laser sensor.

11. The method according to any one of the preceding claims, wherein said error measures (EM¹, EM²) are summed to thereby obtain said trajectory estimate error.

12. The method according to any one of the preceding claims, wherein an error measure (EM¹, EM²) is multiplied with its corresponding individual reliability measure (R¹, R²) in order to obtain said weighted error measure.

13. The method according to any one of the preceding claims, wherein at least one trajectory indication sample (*TIS¹*) is associated with said at least one camera 12.

14. The method according to claim 13, wherein said trajectory indication sample (*TIS¹*) associated with said at least one camera (12) is determined by:
• generating an image (*i*ₖ, *i*ₖ₊₁) at each time instant in a time set comprising at least two subsequent time instants (tₖ, tₖ₊₁) to thereby obtain an image set, and
• determining said trajectory indication sample (*TIS¹*) associated with said at least one camera (12) by using said image set.

15. The method according to claim 14, wherein said trajectory indication sample (*TIS¹*) associated with said at least one camera (12) is determined by:
• identifying if said image set images a moving object, and
• if a moving object has been imaged, removing said moving object from said image set prior to determining said trajectory indication sample.

16. The method according to any one of the preceding claims, wherein said steps of determining a trajectory estimate (Cₑₛₜ) and determining a corresponding trajectory estimate error (CE) are repeated until a trajectory estimate (Cₑₛₜ) has been found which has a trajectory estimate error (CE) within said predetermined trajectory estimate error range (ΔCE).

17. The method according to any one of the preceding claims, wherein the method further comprises inserting a fictive object into a scenario set, said scenario set comprising a first scenario sample and a second scenario sample each one of which being generated by a respective sensor attached to a moving vehicle, said method comprising:
• inserting said fictive object into said first scenario sample but not into said second scenario sample.

## Patentansprüche

1. Verfahren zur Einfügung eines fiktiven Objekt (*a⁰*) in eine Bildmenge (*I*), die von mindestens einer Kamera (12) erzeugt wurde, wenn an einem sich bewegenden Fahrzeug (10) angebracht, wobei das Verfahren umfasst:
• Bestimmen eines optischen Maßes, das eine Bewegungsunschärfe der mindestens einen Kamera (12) angibt, die während der Erzeugung der Bildmenge (*I*) auftrat;
• Einfügen des fiktiven Objekts (*a⁰*) in mindestens ein Bild der Bildmenge (*I*), wobei die visuelle Erscheinung des fiktiven Objekts derart modifiziert wird, dass es dem optischen Maß entspricht;
wobei das Verfahren **dadurch gekennzeichnet ist, dass** es ferner ein Bestimmen einer Bewegungsbahn (C) umfasst, entlang welcher die mindestens eine Kamera (12) sich bewegt, wenn an dem sich bewegenden Fahrzeug (10) angebracht, wobei das Verfahren umfasst:
• Bestimmen einer Mustermenge von Bewegungsbahn-Angabemustern (*TIS¹*, *TIS²*), wobei die Mustermenge mindestens zwei Bewegungsbahn-Angabemuster umfasst;
• Bestimmen für jedes Bewegungsbahn-Angabemuster in der Mustermenge (*TIS¹*, *TIS²*) eines individuellen Zuverlässigkeitsmaßes (R¹, R²), das die Zuverlässigkeit des assoziierten Bewegungsbahn-Angabemusters angibt;
• Bestimmen einer Bewegungsbahnschätzung (Cₑₛₜ);
• Bestimmen eines Bewegungsbahnschätzfehlers (CE) durch Bestimmen für jedes der Bewegungsbahn-Angabemuster in der Mustermenge eines Fehlermaßes (EM¹, EM²), das einen Fehler zwischen der Bewegungsbahnschätzung (Cₑₛₜ) und dem Bewegungsbahn-Angabemuster (*TIS¹*, *TIS²*) angibt, und durch Kombinieren der Fehlermaße, gewichtet durch das individuelle Zuverlässigkeitsmaß, und
• Bestimmen der Bewegungsbahn (C) als eine Bewegungsbahnschätzung (Cₑₛₜ), die zu einem Bewegungsbahnschätzfehler (CE) führt, der innerhalb eines vorgegebenen Bewegungsbahnschätzfehlerbereichs (ΔCE) liegt.

2. Verfahren nach Anspruch 1, wobei das optische Maß eine Oberflächenschichterscheinung von in der Bildmenge (*I*) abgebildeten Objekten angibt.

3. Verfahren nach Anspruch 1 oder 2, wobei das optische Maß eine optische Bedingung der mindestens einen Kamera (12) angibt.

4. Verfahren nach Anspruch 3, wobei das optische Maß eine Unschärfe und/oder Verzerrung der mindestens einen Kamera (12) angibt.

5. Verfahren nach einem der vorhergehenden Ansprüche, wobei das Fahrzeug eine Windschutzscheibe umfasst, und das optische Maß eine Windschutzscheibenbeugung der mindestens einen Kamera (12) angibt.

6. Verfahren nach einem der vorhergehenden Ansprüche, wobei ein Bewegungsbahn-Angabemuster (*TIS²*) in der Mustermenge durch Verwenden eines dynamischen Fahrzeugmodells bestimmt wird.

7. Verfahren nach einem der vorhergehenden Ansprüche, wobei ein Bewegungsbahn-Angabemuster (*TIS²*) in der Mustermenge durch Verwenden von Fahrzeugbewegungsmessungen bestimmt wird.

8. Verfahren nach einem der vorhergehenden Ansprüche, wobei ein Bewegungsbahn-Angabemuster (*TIS²*) in der Mustermenge durch Verwenden von Fahrzeugsteuereingangsmessungen bestimmt wird.

9. Verfahren nach einem der vorhergehenden Ansprüche, wobei ein Bewegungsbahn-Angabemuster (*TIS²*) in der Mustermenge durch Verwenden von GPS- und/oder dGPS-Messungen bestimmt wird.

10. Verfahren nach einem der vorhergehenden Ansprüche, wobei ein Bewegungsbahn-Angabemuster (*TIS²*) in der Mustermenge durch Verwenden mindestens eines RADAR-, LIDAR- oder Lasersensors bestimmt wird.

11. Verfahren nach einem der vorhergehenden Ansprüche, wobei die Fehlermaße (EM¹, EM²) summiert werden, um dadurch den Bewegungsbahnschätzfehler zu erhalten.

12. Verfahren nach einem der vorhergehenden Ansprüche, wobei ein Fehlermaß (EM¹, EM²) mit seinem entsprechenden individuellen Zuverlässigkeitsmaß (R¹, R²) multipliziert wird, um das gewichtete Fehlermaß zu erhalten.

13. Verfahren nach einem der vorhergehenden Ansprüche, wobei mindestens ein Bewegungsbahn-Angabemuster (*TIS¹*) mit der mindestens einen Kamera (12) assoziiert ist.

14. Verfahren nach Anspruch 13, wobei das Bewegungsbahn-Angabemuster (*TIS¹*), das mit der mindestens einen Kamera (12) assoziiert ist, bestimmt wird durch:
• Erzeugen eines Bildes (*iₖ*, *iₖ₊₁*) zu jedem Zeitpunkt in einer Zeitmenge, die mindestens zwei aufeinanderfolgende Zeitpunkte (*tₖ*, *tₖ₊₁*) umfasst, um eine Bildmenge zu erhalten, und
• Bestimmen des Bewegungsbahn-Angabemusters (*TIS¹*), das mit der mindestens einen Kamera (12) assoziiert ist, durch Verwenden der Bildmenge.

15. Verfahren nach Anspruch 14, wobei das Bewegungsbahn-Angabemuster (*TIS¹*), das mit der mindestens einen Kamera (12) assoziiert ist, bestimmt wird durch:
• Identifizieren, ob die Bildmenge ein sich bewegendes Objekt abbildet, und
• Entfernen, wenn ein sich bewegendes Objekt abgebildet wurde, des sich bewegenden Objekts aus der Bildmenge vor dem Bestimmen des Bewegungsbahn-Angabemusters.

16. Verfahren nach einem der vorhergehenden Ansprüche, wobei die Schritte des Bestimmens einer Bewegungsbahnschätzung (Cₑₛₜ) und des Bestimmens eines entsprechenden Bewegungsbahnschätzfehlers (CE) wiederholt werden, bis eine Bewegungsbahnschätzung (Cₑₛₜ) gefunden wurde, die einen Bewegungsbahnschätzfehler (CE) innerhalb des vorgegebenen Bewegungsbahnschätzfehlerbereichs (ΔCE) aufweist.

17. Verfahren nach einem der vorhergehenden Ansprüche, wobei das Verfahren ferner ein Einfügen eines fiktiven Objekts in eine Szenarienmenge umfasst, wobei die Szenarienmenge ein erstes Szenarienmuster und ein zweites Szenarienmuster umfasst, die jeweils durch einen jeweiligen Sensor erzeugt werden, der an einem sich bewegenden Fahrzeug angebracht ist, wobei das Verfahren umfasst:
• Einfügen des fiktiven Objekts in das erste Szenarienmuster, aber nicht in das zweite Szenarienmuster.

## Revendications

1. Procédé pour insérer un objet fictif (*a⁰*) dans un ensemble d'images (*I*) qui a été généré par au moins une caméra (12) lorsqu'elle est fixée à un véhicule mobile (10), ledit procédé comprenant :
- la détermination d'une mesure optique indicative d'un flou de mouvement de ladite au moins une caméra (12) qui s'est produit pendant la génération dudit ensemble d'images (*I*) ;
- l'insertion dudit objet fictif (*a⁰*) dans au moins une image dudit ensemble d'images (*I*), l'apparence visuelle dudit objet fictif étant modifiée de manière à correspondre à ladite mesure optique ;
ledit procédé étant **caractérisé en ce qu'**il comprend en outre la détermination d'une trajectoire (C) le long de laquelle ladite au moins une caméra (12) se déplace lorsqu'elle est fixée audit véhicule mobile (10), ledit procédé comprenant :
- la détermination d'un ensemble d'échantillons d'indication de trajectoire (*TIS¹*, *TIS²*), ledit ensemble d'échantillons comprenant au moins deux échantillons d'indication de trajectoire ;
- pour chaque échantillon d'indication de trajectoire dans ledit ensemble d'échantillons (*TIS¹*, *TIS²*), la détermination d'une mesure de fiabilité individuelle (R¹, R²) indicative de la fiabilité de l'échantillon d'indication de trajectoire associé ;
- la détermination d'une estimation de trajectoire (Cₑₛₜ) ;
- la détermination d'une erreur d'estimation de trajectoire (CE) au moyen de, pour chacun desdits échantillons d'indication de trajectoire dans ledit ensemble d'échantillons, la détermination d'une mesure d'erreur (EM¹, EM²) indicative d'une erreur entre l'estimation de trajectoire (Cₑₛₜ) et ledit échantillon d'indication de trajectoire (*TIS¹*, *TIS²*), et la combinaison desdites mesures d'erreur, pondérées par ladite mesure individuelle de fiabilité, et
- la détermination de ladite trajectoire (C) comme étant une estimation de trajectoire (Cₑₛₜ) qui résulte en une erreur d'estimation de trajectoire (CE) qui est dans une plage d'erreur d'estimation de trajectoire prédéterminée (ΔCE).

2. Procédé selon la revendication 1, ladite mesure optique étant indicative de l'apparence de la couche superficielle d'objets représentés dans ledit ensemble d'images (*I*).

3. Procédé selon la revendication 1 ou 2, ladite mesure optique étant indicative d'un état optique de ladite au moins une caméra (12).

4. Procédé selon la revendication 3, ladite mesure optique étant indicative d'un flou et/ou d'une distorsion de ladite au moins une caméra (12).

5. Procédé selon l'une quelconque des revendications précédentes, ledit véhicule comprenant un pare-brise et ladite mesure optique étant indicative d'une diffraction par le pare-brise de ladite au moins une caméra (12).

6. Procédé selon l'une quelconque des revendications précédentes, un échantillon d'indication de trajectoire (*TIS²*) dans ledit ensemble d'échantillons étant déterminé en utilisant un modèle dynamique de véhicule.

7. Procédé selon l'une quelconque des revendications précédentes, un échantillon d'indication de trajectoire (*TIS²*) dans ledit ensemble d'échantillons étant déterminé en utilisant des mesures de mouvement du véhicule.

8. Procédé selon l'une quelconque des revendications précédentes, un échantillon d'indication de trajectoire (*TIS²*) dans ledit ensemble d'échantillons étant déterminé en utilisant des mesures d'entrée de commande de véhicule.

9. Procédé selon l'une quelconque des revendications précédentes, un échantillon d'indication de trajectoire (*TIS²*) dans ledit ensemble d'échantillons étant déterminé en utilisant des mesures GPS et/ou dGPS.

10. Procédé selon l'une quelconque des revendications précédentes, un échantillon d'indication de trajectoire (*TIS²*) dans ledit ensemble d'échantillons étant déterminé en utilisant au moins un capteur RADAR, LIDAR ou laser.

11. Procédé selon l'une quelconque des revendications précédentes, lesdites mesures d'erreur (EM¹, EM²) étant sommées pour obtenir ainsi ladite erreur d'estimation de trajectoire.

12. Procédé selon l'une quelconque des revendications précédentes, une mesure d'erreur (EM¹, EM²) étant multipliée par sa mesure de fiabilité individuelle correspondante (R¹, R²) afin d'obtenir ladite mesure d'erreur pondérée.

13. Procédé selon l'une quelconque des revendications précédentes, au moins un échantillon d'indication de trajectoire (*TIS¹*) étant associé à ladite au moins une caméra (12).

14. Procédé selon la revendication 13, ledit échantillon d'indication de trajectoire (*TIS¹*) associé à ladite au moins une caméra (12) étant déterminé par :
- la génération d'une image (*i*_{K}, *i*_{K+1}) à chaque instant dans un ensemble d'instants comprenant au moins deux instants de temps suivants (t_{K}, t_{K+1}) pour obtenir ainsi un ensemble d'images, et
- la détermination dudit échantillon d'indication de trajectoire (*TIS¹)* associé à ladite au moins une caméra (12) en utilisant ledit ensemble d'images.

15. Procédé selon la revendication 14, ledit échantillon d'indication de trajectoire (*TIS¹*) associé à ladite au moins une caméra (12) étant déterminé par :
- l'identification si ledit ensemble d'images représente un objet en mouvement, et
- si un objet en mouvement a été représenté, le retrait dudit objet en mouvement dudit ensemble d'images avant de déterminer ledit échantillon d'indication de trajectoire.

16. Procédé selon l'une quelconque des revendications précédentes, lesdites étapes de détermination d'une estimation de trajectoire (Cₑₛₜ) et de détermination d'une erreur d'estimation de trajectoire correspondante (CE) étant répétées jusqu'à ce qu'une estimation de trajectoire (Cₑₛₜ) ait été trouvée qui a une erreur d'estimation de trajectoire (CE) dans ladite plage d'erreur d'estimation de trajectoire prédéterminée (ΔCE).

17. Procédé selon l'une quelconque des revendications précédentes, le procédé comprenant en outre l'insertion d'un objet fictif dans un ensemble de scénarios, ledit ensemble de scénarios comprenant un premier échantillon de scénario et un deuxième échantillon de scénario dont chacun est généré par un capteur respectif fixé à un véhicule en mouvement, ledit procédé comprenant :
- l'insertion dudit objet fictif dans ledit premier échantillon de scénario mais pas dans ledit deuxième échantillon de scénario.
